# EUROPEAN PATENT SPECIFICATION

(11) **EP 3 381 643 B1**
(45) Date of publication and mention of the grant of the patent: **17.06.2020**
(21) Application number: 18164120.0
(22) Date of filing: 27.03.2018
(51) Int. Cl.: B29C 45/54, F16K 3/24, F16K 11/085

(54) **INJECTION UNIT AND DIRECTION SWITCHING VALVE**
EINSPRITZEINHEIT UND RICHTUNGSSCHALTVENTIL
UNITÉ D'INJECTION ET SOUPAPE DE COMMUTATION DE DIRECTION

(30) Priority: 31.03.2017 JP 2017072829
(43) Date of publication of application: 03.10.2018
(73) Proprietor: Sumitomo Heavy Industries, Ltd., Tokyo 141-6025 (JP)
(72) Inventor: NOSAKA, Hiromichi, Chiba-shi, Chiba 263-0001 (JP); TAKEUCHI, Shigeru, Chiba-shi, Chiba 263-0001 (JP)
(74) Representative: Louis Pöhlau Lohrentz

(56) References cited:
- JP-A- H07 117 087
- US-A1- 2011 011 474
- US-A1- 2014 076 454

## Description

### BACKGROUND OF THE INVENTION

### Field of the Invention

Certain embodiments of the present invention relate to an injection unit and a direction switching valve.

### Description of Related Art

In the related art, in a preplasticizing type injection unit, a resin melted by a plasticizing cylinder (screw cylinder) is transferred to an injection cylinder (plunger cylinder), and the resin supplied to the injection cylinder is injected from a nozzle to a mold by a plunger. In the supply of the resin from the plasticizing cylinder to the injection cylinder and the injection of the resin from the injection cylinder to the mold via the nozzle, flow paths are switched using a switching valve (for example, Japanese Patent No. 3318740; JP H07 117087).

Meanwhile, it is necessary to increase a flow path sectional area in order to increase a flow rate of a molding material (resin) in the preplasticizing type injection unit. Accordingly, it is necessary to expand an internal flow path of a valve pin (valve body) of the switching valve. For example, the internal flow path of the valve body can be easily expanded by increasing a diameter of a columnar shape of the valve body. However, if the diameter of the valve body increases, an area of a peripheral surface of the valve body increases, and thus, a sliding resistance increases when the valve body is rotated. Therefore, there is a concern that problems such as an increase in energy consumption or generation of heat when the flow path is switched occur.

United States Patent Application US 2014/076454 A1 discloses a fluid manifold system with a plurality of outlet ports formed thereon and a carousel having a plurality of spaced apart fluid paths that extend therethrough between said ports.

United States Patent Application US 2011/011474 A1 discloses a stopcock with multiple ports joining multiple fluid conduits leading between fluid sources and fluid destinations.

### SUMMARY OF THE INVENTION

The present invention is made in consideration of the above-described problems, and an object thereof is to provide an injection unit and a direction switching valve capable of increasing a flow path sectional area without increasing a diameter of a valve body.

In order to achieve the above-described object, according to an aspect of the present invention, there is provided an injection unit, including: a first cylinder; a second cylinder; a nozzle; and a direction switching valve which switches a flow direction of a molding material between the first cylinder, the second cylinder, and the nozzle, in which the direction switching valve includes a valve casing and a columnar valve body which is rotatably disposed inside the valve casing, the valve casing includes a first cylinder connection port which communicates with an inside of the first cylinder, a second cylinder connection port which communicates with an inside of the second cylinder, and a nozzle connection port which communicates with an inside of the nozzle, the valve body includes a first flow path which communicates with the first cylinder connection port and the second cylinder connection port and a second flow path which communicates with the second cylinder connection port and the nozzle connection port and performs switching such that the molding material flows to one of the first flow path and the second flow path according to a rotation of the valve body inside the valve casing, and the first flow path and the second flow path are configured such that a shape of a valve body-side opening portion of a peripheral surface of the valve body is an elliptical shape in which a length of the valve body-side opening portion in an axial direction of the valve body is longer than a length of the valve body-side opening portion in a circumferential direction of the peripheral surface.

Similarly, in order to achieve the above-described object, according to another aspect of the present invention, there is provided a direction switching valve which switches a flow direction of a fluid between a first member, a second member, and a third member, the valve including: a valve casing; and a columnar valve body which is rotatably disposed inside the valve casing, in which the valve casing includes a first member connection port which communicates with an inside of the first member, a second member connection port which communicates with an inside of the second member, and a third member connection port which communicates with an inside of the third member, the valve body includes a first flow path which communicates with the first member connection port and the second member connection port and a second flow path which communicates with the second member connection port and the third member connection port and performs switching such that the fluid flows to one of the first flow path and the second flow path according to a rotation of the valve body inside the valve casing, and the first flow path and the second flow path are configured such that a shape of a valve body-side opening portion of a peripheral surface of the valve body is an elliptical shape in which a length of the valve body-side opening portion in an axial direction of the valve body is longer than a length of the valve body-side opening portion in a circumferential direction of the peripheral surface .

According to the aspects of the present invention, it is possible to provide the injection unit and the direction switching valve capable of increasing a flow path sectional area without increasing a diameter of the valve body.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a view showing an injection unit according to a first embodiment and shows a first state of a valve body of a direction switching valve.
Fig. 4 is a view showing the injection unit according to the first embodiment and shows a second state of the valve body of the direction switching valve.
Fig. 5 is a perspective view showing a configuration of the valve body in Figs. 3 and 4.
Fig. 6 is a sectional perspective view when a valve casing in Figs. 3 and 4 is taken along a horizontal plane (X-Y plane) .
Fig. 7 is a view showing an injection unit according to a second embodiment and shows a first state of a valve body of a direction switching valve.
Fig. 8 is a view showing the injection unit according to the second embodiment and shows a second state of the valve body of the direction switching valve.
Fig. 9 is a perspective view showing a configuration of the valve body in Figs. 7 and 8.

### DETAILED DESCRIPTION OF THE INVENTION

Hereinafter, embodiments will be described with reference to the accompanying drawings. In order to facilitate understanding of descriptions, the same reference numerals are assigned to the same constituent elements in each drawing as much as possible, and overlapping descriptions thereof are omitted.

### First Embodiment

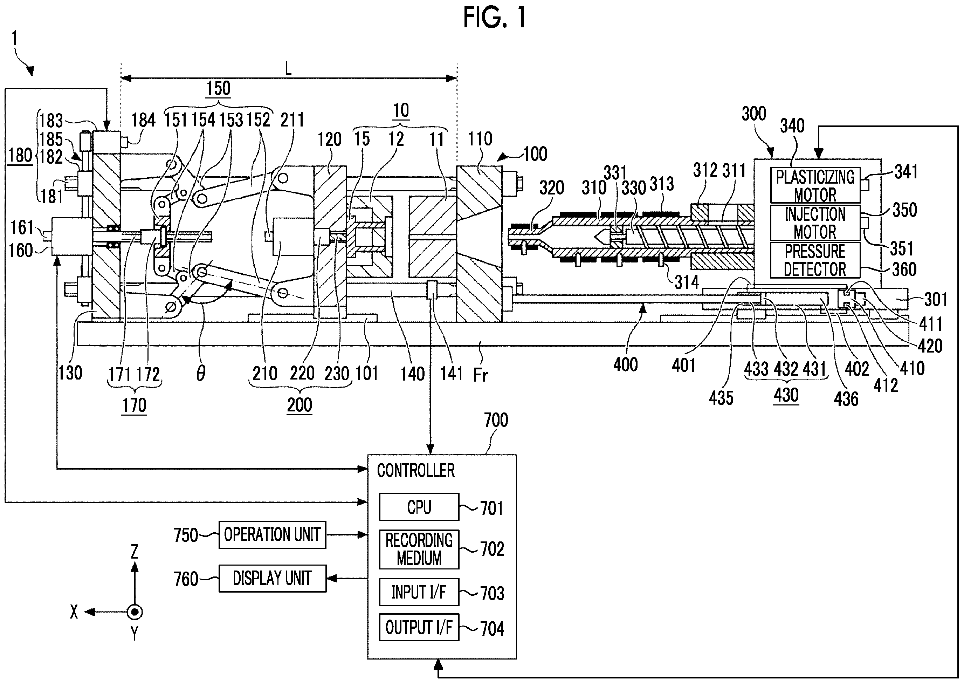

A first embodiment will be described with reference to Figs. 1 to 6.

### Schematic Configuration of Injection Molding Machine

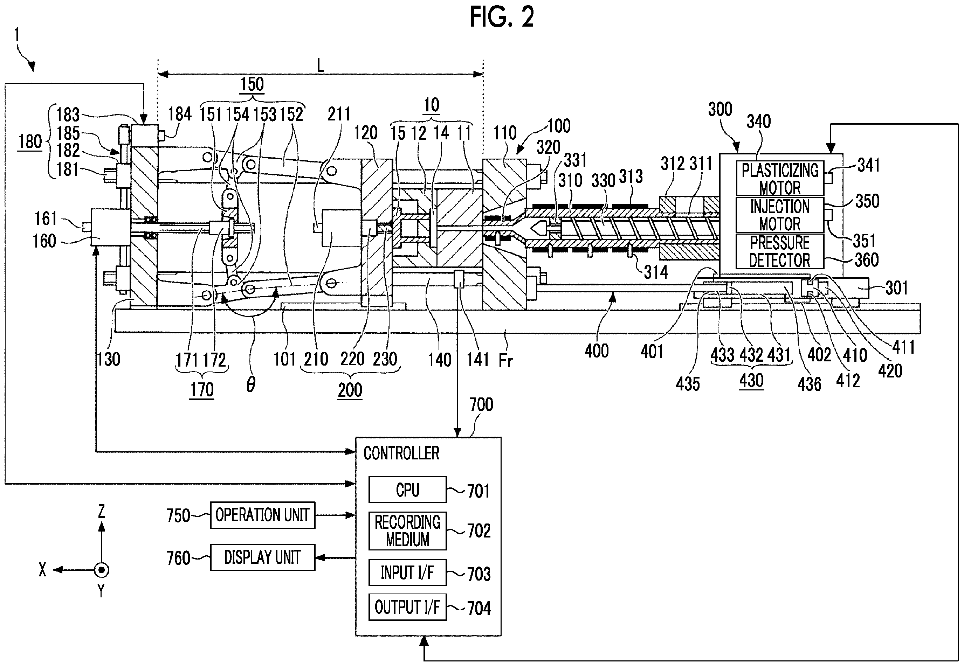

First, a schematic configuration of the entire injection molding machine 1 which becomes a base of a configuration of the first embodiment will be described with reference to Figs. 1 and 2. In addition, in Figs. 1 to 6 or the like, an X direction, a Y direction, and a Z direction are directions orthogonal to each other. The X direction and the Y direction are a horizontal direction, and the Z direction is a vertical direction. The X direction is the same as a movement direction of a movable platen 120 or an injection unit 300 of an injection molding machine 1 according to the present embodiment or mold opening and closing direction of the injection molding machine 1, and the Y direction is a width direction of the injection molding machine 1.

### Injection Molding machine

Fig. 1 is a view showing a state when a mold opening of the injection molding machine 1 according to an embodiment is completed. Fig. 2 is a view showing a state when a mold of the injection molding machine 1 according to the embodiment is clamped. As shown in Figs. 1 and 2, the injection molding machines include a mold clamping unit 100, an ejector unit 200, an injection unit 300, a movement unit 400, and a controller 700. Hereinafter, each component of the injection molding machine will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 is moved forward or rearward with respect to the stationary platen 110, and thus, closing, clamping, and opening of the mold are performed. The mold unit 10 is configured of the stationary mold 11 and the movable mold 12.

The toggle support 130 is connected to the stationary platen 110 with a gap therebetween, and is placed on the frame Fr to be movable in mold opening and closing directions . In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or the like and the second link 153 is attached to the toggle support 130 so as to be oscillated by pins or the like. The second link 153 is attached to the crosshead 151 via a third link 154. If the crosshead 151 is moved forward or rearward with respect to the toggle support 130, the first link 152 and the second link 153 are bent and stretched and the movable platen 120 is moved forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 is moved forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 is moved forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products maybe simultaneously obtained.

In the mold opening process, the mold clamping motor 160 is driven to move the crosshead 151 rearward to a mold opening completion position at a set speed. Accordingly, the movable platen 120 is moved rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including a speed switching position, a mold closing completion position, and a mold clamping position) of the crosshead 151 in the mold closing process and the mold clamping process are collectively set as a series of setting conditions. In addition, instead of the speed, the positions, or the like of the crosshead 151, a speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 becomes a predetermined angle at the time of a mold touch where the movable mold 12 comes into contact with the stationary mold 11.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends signals indicating the detection results to the controller 700. The detection results of the mold space adjustment motor encoder 184 are used to monitor or control the position of the toggle support 130 or the gap L.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motors 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen and is connected to the upper platen via the tie bar. The upper platen and the toggle support are connected to each other in mold opening and closing directions by the tie bar with a gap therebetween. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### Ejector Unit

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is open is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can be moved forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the controller 700.

In the ejection process, the ejector motor 210 is driven to move the ejector rod 230 forward from a standby position to an ejection position at a set speed, and thus, the movable member 15 is moved forward and the molding product is ejected. Thereafter, the ejector motor 210 is driven to move the ejector rod 230 rearward at a set speed, and thus, the movable member 15 is moved rearward to an original standby position. For example, a position or speed of the ejector rod 230 is detected using an ejector motor encoder 211. The ejector motor encoder 211 detects the rotation of the ejector motor 210 and sends signals indicating the detection results to the controller 700.

### Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 is moved rearward. Thereafter, if the screw 330 is moved forward, the liquid molding material accumulated in front of the screw 330 is injected from the nozzle 320 and the inside of the mold unit 10 is filled with the liquid molding material.

A backflow prevention ring 331 is attached to a front portion of the screw 330 to be movable forward or rearward as a backflow prevention valve which prevents a backflow of the molding material from the front side of the screw 330 toward the rear side when the screw 330 is pushed forward.

When the screw 330 is moved forward, the backflow prevention ring 331 is pushed toward the rear side by the pressure of the molding material in front of the screw 330 and is moved rearward relative to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and is moved forward relative to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward relative to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder or the like, for example.

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may be moved forward or may be moved rearward at a very slow speed.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 is moved rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends signals indicating the detection results to the controller 700.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 is moved rearward to a plasticizing completion position and a predetermined amount of the molding materials is accumulated in front of the screw 330, the plasticizing process is completed.

In addition, the injection unit 300 of the present embodiment is an inline and screw type injection unit. However, the injection unit 300 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 is moved forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 is moved rearward and thus, the nozzle 320 is separated from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### Controller

For example, as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is referred to as "shot" or a "molding cycle" . In addition, a time required for once shot is also referred to as a "molding cycle time".

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700.

The operation screen is used for the setting of the injection molding machine 1 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 1 or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

### Configuration of Preplasticizing Type Injection Unit

In the first embodiment, the injection unit 300 of the elements of the injection molding machine 1 shown in Figs. 1 and 2 is replaced with a preplasticizing type injection unit. Hereinafter, a configuration of the preplasticizing type injection unit 300 included in the injection molding machine 1 according to the first embodiment will be described.

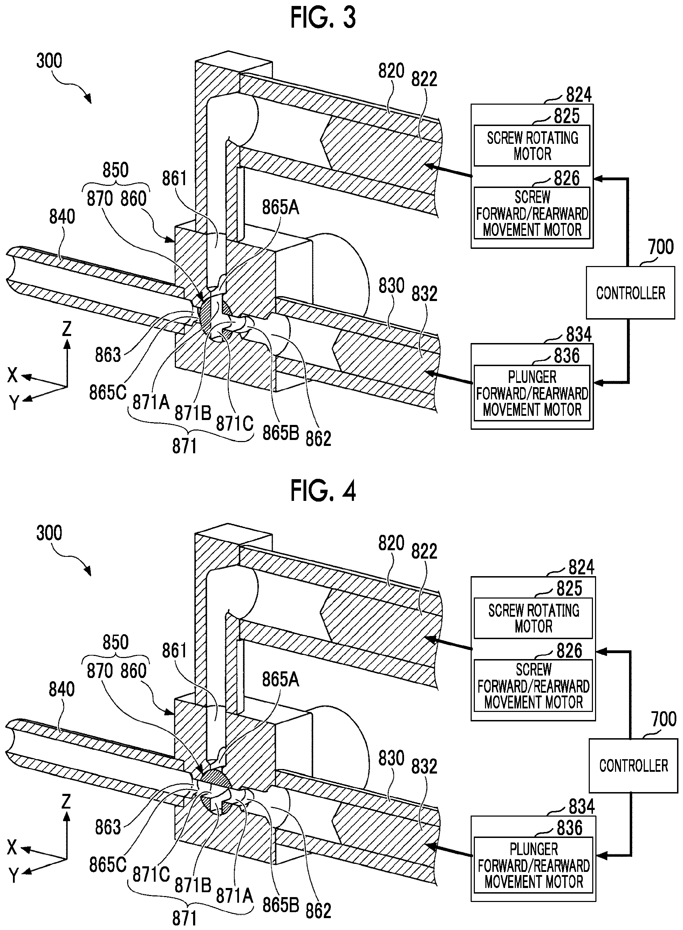

Fig. 3 is a view showing an injection unit 300 according to the first embodiment and shows a first state of a valve body 870 of a direction switching valve 850. Fig. 4 is a view showing the injection unit 300 according to the first embodiment and shows a second state of the valve body 870 of the direction switching valve 850. Figs. 3 and 4 are sectional views perpendicular to a rotation center line of the valve body 870. As shown in Figs. 3 and 4, the injection unit 300 includes a screw cylinder 820 (first cylinder, first member), a screw 822, a screw drive unit 824, a plunger cylinder 830 (second cylinder, second member), a plunger 832, a plunger drive unit 834, a nozzle 840 (third member), a direction switching valve 850, and a controller 700.

A solid molding material is supplied from the outside to the inside of the screw cylinder 820. The screw cylinder 820 heats and melts the solid molding material. A heating source such as a heater is provided on an outer periphery of the screw cylinder 820.

The screw 822 is disposed inside the screw cylinder 820 and moves the molding material inside the screw cylinder 820. The screw 822 may be disposed to be movable forward or rearward and rotatable inside the screw cylinder 820. In addition, the screw 822 may be disposed to be unmovable forward or rearward and rotatable inside the screw cylinder 820.

The screw drive unit 824 operates the screw 822. For example, the screw drive unit 824 includes a screw rotating motor 825 and a screw forward/rearward movement motor 826. The screw rotating motor 825 rotates the screw 822. The screw forward/rearward movement motor 826 moves the screw 822 forward or rearward. A motion conversion mechanism is provided between the screw 822 and the screw forward/rearward movement motor 826 and the motion conversion mechanism converts a rotary motion of the screw forward/rearward movement motor 826 into a linear motion of the screw 822. For example, the motion conversion mechanism is configured of a ball screw or the like.

The molding material from the screw cylinder 820 is supplied to the inside of the plunger cylinder 830. A heating source such as a heater is provided on the outer periphery of the plunger cylinder 830.

The plunger 832 is disposed inside the plunger cylinder 830 and moves the molding material inside the plunger cylinder 830. The plunger 832 is disposed to be movable forward or rearward inside the plunger cylinder 830.

The plunger drive unit 834 operates the plunger 832. The plunger drive unit 834 includes a plunger forward/rearward movement motor 836. The plunger forward/rearward movement motor 836 moves the plunger 832 forward or rearward. A motion conversion mechanism is provided between the plunger 832 and the plunger forward/rearward movement motor 836 and the motion conversion mechanism converts a rotary motion of the plunger forward/rearward movement motor 836 to a linear motion of plunger 832. For example, the motion conversion mechanism is configured of a ball screw.

The molding material supplied from the direction switching valve 50 is injected to the mold unit by the nozzle 840. A liquid molding material with which the inside of the mold unit is filled is solidified and the molding product is molded.

The direction switching valve 850 switches a flow direction of the molding material (fluid) between the screw cylinder 820, the plunger cylinder 830, and the nozzle 840. The direction switching valve 850 includes a valve casing 860 and a columnar valve body 870 which is rotatably disposed inside the valve casing 860.

The valve casing 860 includes a screw cylinder connection port 861 (first cylinder connection port, first member connection port), a plunger cylinder connection port 862 (second cylinder connection port, second member connection port), and a nozzle connection port 863 (third member connection port) . The screw cylinder connection port 861 communicates with the inside of the screw cylinder 820. The plunger cylinder connection port 862 communicates with the inside of the plunger cylinder 830. The nozzle connection port 863 communicates with the inside of the nozzle 840.

For example, the plunger cylinder connection port 862 and the nozzle connection port 863 are provided on sides opposite to each other in a state where the rotation center line of the valve body 870 is interposed therebetween. Meanwhile, for example, the screw cylinder connection port 861 is provided at substantially the same distance along an outer periphery of the valve body 870 from both the plunger cylinder connection port 862 and the nozzle connection port 863. That is, the plunger cylinder connection port 862, the screw cylinder connection port 861, and the nozzle connection port 863 are disposed in this order at a 90° pitch in a predetermined direction (the counterclockwise direction in Figs. 3 and 4) about the rotation center line of the valve body 870.

The valve body 870 is rotated inside the valve casing 860, and thus, the valve body 870 is switched between the first state (refer to Fig. 3) and the second state (refer to Fig. 4). When the valve body 870 is in the first state, the valve body 870 causes the screw cylinder connection port 861 and the plunger cylinder connection port 862 to communicate with each other and closes the nozzle connection port 863. Meanwhile, when the valve body 870 is in the second state, the valve body 870 causes the plunger cylinder connection port 862 and the nozzle connection port 863 to communicate with each other and closes the screw cylinder connection port 861. In order to perform the switching between the two states, in the first embodiment, a flow path 871 which is formed in an approximately T shape when viewed in the direction of the rotation center line of the valve body 870 is provided inside the valve body 870.

In addition, the state of the valve body 870 is not limited to the first state shown in Fig. 3 and the second state shown in Fig. 4. For example, the valve body 870 may close the screw cylinder connection port 861, the plunger cylinder connection port 862, and the nozzle connection port 863 at the same time. In addition, the valve body 870 may cause the screw cylinder connection port 861 and the nozzle connection port 863 to communicate with each other and close the plunger cylinder connection port 862.

The controller 700 controls the screw drive unit 824, the plunger drive unit 834, the direction switching valve 850, or the like.

### Configuration of Valve Body

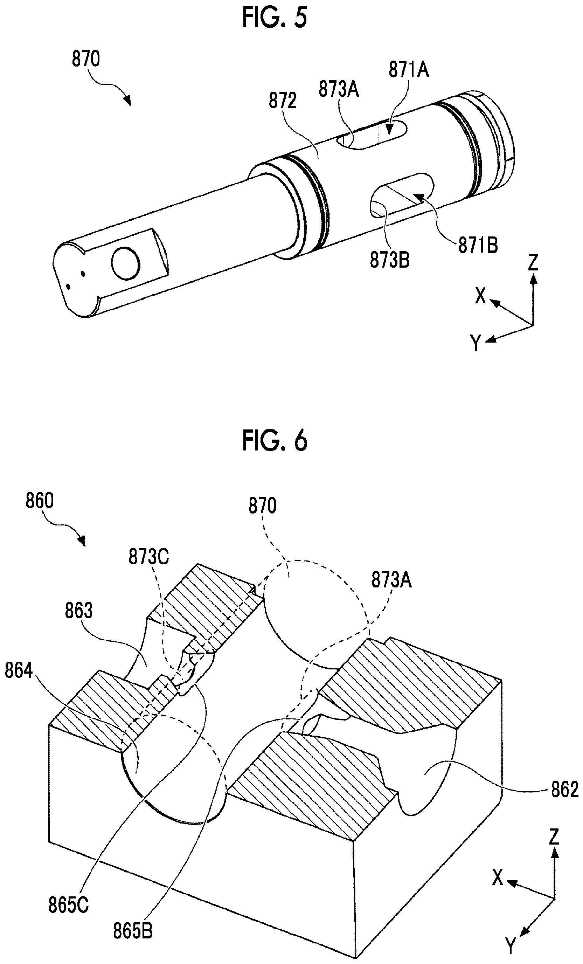

Fig. 5 is a perspective view showing a configuration of the valve body 870 in Figs. 3 and 4. As shown in Fig. 5, the valve body 870 is formed in an approximately columnar shape so as to be rotatably disposed inside the valve casing 860. In addition, as described above, the approximately T-shaped flow path 871 is provided inside the valve body 870. As shown in Fig. 3 and 4, the flow path 871 includes a first hole 871A, a second hole 871B, and a third hole 871C which are disposed at a 90° pitch in the predetermined direction (the clockwise direction in Figs. 3 and 4) about the rotation center line of the valve body 870.

As shown in Fig. 3, when the valve body 870 is in the first state, the first hole 871A faces the screw cylinder connection port 861 so as to communicate with each other and the second hole 871B faces the plunger cylinder connection port 862 so as to communicate with each other. That is, the first hole 871A and the second hole 871B in the flow path 871 of the valve body 870 becomes a first flow path through which the screw cylinder connection port 861 and the plunger cylinder connection port 862 communicate with each other.

Moreover, as shown in Fig. 4, when the valve body 870 is in the second state, the first hole 871A faces the plunger cylinder connection port 862 so as to communicate with each other and the third hole 871C faces the nozzle connection port 863 so as to communicate with each other. That is, the first hole 871A and the third hole 871C in the flow path 871 of the valve body 870 becomes a second flow path through which the plunger cylinder connection port 862 and the nozzle connection port 863 communicate with each other at the time of the second state.

The first flow path and the second flow path, that is, the first hole 871A, the second hole 871B, and the third hole 871C are open to a peripheral surface 872 of the valve body 870. The openings are referred to as opening portions 873A, 873B, and 873C (valve body-side opening portions). In addition, particularly, in the present embodiment, a shape of each of the opening portions 873A, 873B, and 873C is an elliptical shape in which a length of each opening portion in an axial direction of the valve body 870 is longer than a length of each opening portion in a circumferential direction of the peripheral surface 872. Moreover, in each of the opening portions 873A, 873B, and 873C, a long axis of the elliptical shape is provided to be parallel to the axial direction of the valve body 870.

Fig. 6 is a sectional perspective view when the valve casing 860 in Figs. 3 and 4 is taken along a horizontal plane (X-Y plane) . A cutting surface in Fig. 6 is disposed along the rotation center line of the valve body 870. As shown in Figs. 3 and 4, the screw cylinder connection port 861, the plunger cylinder connection port 862, and the nozzle connection port 863 are open to an inner peripheral surface 864 of the valve casing 860 facing the valve body 870. The openings are referred to as opening portions 865A, 865B, and 865C (valve casing-side opening portions). Although only the opening portions 865B and 865C are shown in Fig. 6. However, the shape of each of the opening portions 865A, 865B, and 865 C is an elliptical shape which is the same as the shape of each of the opening portions 873A, 873B, and 873C of the valve body 870.

That is, the opening portions 873A, 873B, and 873C of the valve body 870 and the opening portions 865A, 865B, and 865C of the valve casing 860 are formed such that when the valve body 870 is rotated inside the valve casing 860 and is positioned to face each other, positions and contours of the opening portions coincide with each other and there is no step in a resin flow path. Fig. 6 shows a case where the opening portion 873A of the first hole 871A of the valve body 870 and the opening portion 865B of the plunger cylinder connection port 862 of the valve casing 860 face each other and the opening portion 873C of the third hole 871C of the valve body 870 and the valve portion and the opening portion 865C of the nozzle connection port 863 of the valve casing 860 face each other, in the second state.

Next, effects of the injection unit 300 and the direction switching valve 850 according to the first embodiment will be described. In the injection unit 300 and the direction switching valve 850 of the first embodiment, the direction switching valve 850 includes the valve casing 860 and the columnar valve body 870 which is rotatably disposed inside the valve casing 860. The valve casing 860 includes the screw cylinder connection port 861 which communicates with the inside of the screw cylinder 820, a plunger cylinder connection port 862 which communicates with the inside of the plunger cylinder 830, and a nozzle connection port 863 which communicates with the inside of the nozzle 840. The valve body 870 includes the first flow path (the first hole 871A and the second hole 871B) through which the screw cylinder connection port 861 and the plunger cylinder connection port 862 communicate with each other and the second flow path (the first hole 871A and the third hole 871C) through which the plunger cylinder connection port 862 and the nozzle connection port 863 communicate with each other, and performs switching such that the molding material flows to one of the first flow path and the second flow path according to a rotation of the valve body 870 inside the valve casing 860. In the first flow path and the second flow path of the valve body 870, the shape of each of the opening portions 873A, 873B, and 873C on the peripheral surface 872 of the valve body 870 is an elliptical shape in which the length of each opening portion in the axial direction of the valve body 870 is longer than the length of each opening portion in the circumferential direction of the peripheral surface 872.

In a preplasticizing type injection unit of the related art, in general, an opening portion of an internal flow path provided in a valve body of a direction switching valve is formed in a perfect circular shape (for example, refer to Japanese Patent No. 3318740). In order to increase a flow rate of the molding material in the injection unit, it is necessary to increase the flow path sectional area. Accordingly, it is necessary to expand an opening portion and an internal flow path of a valve body of the switching valve. For example, the opening portion or the internal flow path of the valve body can be easily expanded by increasing a diameter of a columnar shape of the valve body. However, if the diameter of the valve body, an area of a peripheral surface of the valve body increases, and thus, a sliding resistance increases when the valve body is rotated. Therefore, there is a concern that problems such as an increase in energy consumption or generation of heat when the flow path is switched occur. Meanwhile, if the size of the opening portion or the internal flow path increases in a state where the diameter of the valve body remains the same, a gap between adjacent opening portions decreases, and thus, there is a concern that strength of the valve body decreases. Accordingly, if the diameter remains the same, there is not much amount to increase the flow rate of the molding material.

Accordingly, in the first embodiment, the shape of each of the opening portions 873A, 873B, and 873C of the internal flow path 871 of the valve body 870 is an elliptical shape in which the length of each opening portion in the axial direction of the valve body 870 is longer than the length of each opening portion in the circumferential direction of the peripheral surface 872. According to this configuration, the shape of each opening portion extends in the axial direction from the perfect circular shape of the related art without narrowing a radial gap between the opening portion and the adjacent opening portion, and thus, the shape of each opening portion can be expanded to be formed in an elliptical shape. Accordingly, in the injection unit 300 and the direction switching valve 850 according to the first embodiment, it is possible to increase the flow path sectional area without increasing the diameter of the valve body 870.

In addition, in the injection unit 300 and the direction switching valve 850 according to the first embodiment, in the opening portions 873A, 873B, and 873C of the internal flow path 871 of the valve body 870, the long axis of each elliptical shape is provided to be parallel to the axial direction of the valve body 870. Accordingly, the elliptical shapes of the opening portions 873A, 873B, and 873C can be the same as each other in the longitudinal direction and the opening portions do not intersect each other even when the elliptical shapes extend. Therefore, further expansion of the flow path 871 and the opening portions 873A, 873B, and 873C of the valve body 870 can be facilitated, and it is possible to further increase the flow rate without increasing the diameter of the valve body 870.

Moreover, in the injection unit 300 and the direction switching valve 850 according to the first embodiment, the screw cylinder connection port 861, the plunger cylinder connection port 862, and the nozzle connection port 863 of the valve casing 860 include the opening portions 865A, 865B, and 865C provided in the inner peripheral surface 864 of the valve casing 860 facing the valve body 870. The opening portions 865A, 865B, and 865C are formed so as to coincide with both ends of the opening portions 873A, 873B, and 873C in the longitudinal direction when the opening portions 865A, 865B, and 865C face the opening portions 873A, 873B, and 873C on the valve body 870 side. More specifically, the opening portions 865A, 865B, and 865C on the valve casing 860 side are formed in elliptical shapes in which the opening positions and the contours of the opening portions 865A, 865B, and 865C coincide with those of the opening portions 873A, 873B, and 873C when the opening portions 865A, 865B, and 865C face the opening portions 873A, 873B, and 873C on the valve body 870 side.

According to this configuration, when the valve body 870 is rotated inside the valve casing 860 and any one of the opening portions 873A, 873B, and 873C on the valve body 870 side faces any one of the opening portions 865A, 865B, and 865C on the valve casing 860 side, the opening positions and the contours of both opening portions coincide with each other, and thus, there is no step in the resin flow path. Accordingly, a resistance of the molding material receiving from the flow path decreases in a flow path connection portion between the valve casing 860 and the valve body 870, and thus, the molding material can easily flow. Accordingly, the flow rate of the molding material can further increase, and it is possible to suppress energy loss and heat generation when the molding material flows through the inside of the injection unit.

### Second Embodiment

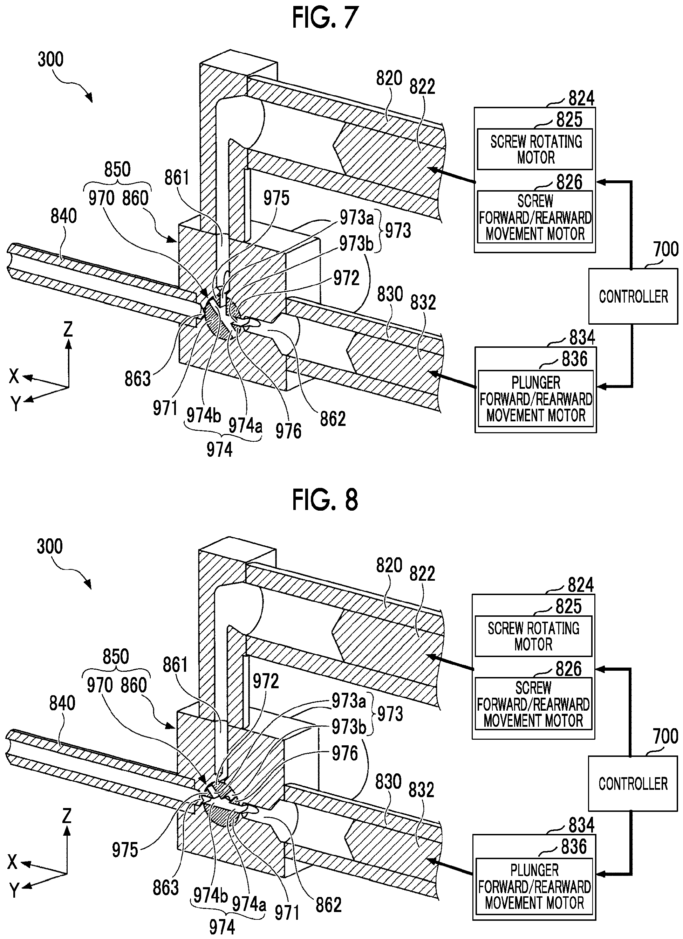

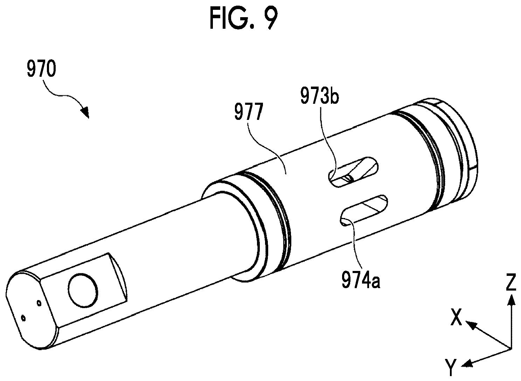

A second embodiment will be described with reference to Figs. 7 and 9. Fig. 7 is a view showing the injection unit 300 according to the second embodiment and shows a first state of a valve body 970 of the direction switching valve 850. Fig. 8 is a view showing the injection unit 300 according to the second embodiment and shows a second state of the valve body 970 of the direction switching valve 850. Fig. 9 is a perspective view showing a configuration of the valve body 970 in Figs. 7 and 8.

As shown Figs. 7 to 9, in the second embodiment, a configuration of a flow path of the valve body 970 of the direction switching valve 850 which is the element of the injection unit 300 is different from that of the first embodiment. In addition, the configuration of the valve casing 860 is similar to that of the first embodiment.

As shown in Figs. 7 and 8, the valve body 970 of the second embodiment includes a first stopper portion 971 and a second stopper portion 972 at an interval along an outer periphery of the valve body 970. When the state of the valve body 970 is the first state shown in Fig. 7, the first stopper portion 971 closes the nozzle connection port 863. Meanwhile, when the state of the valve body 970 is the second state shown in Fig. 8, the second stopper portion 972 closes the screw cylinder connection port 861. The first stopper portion 971 and the second stopper portion 972 are connected to each other and are integrally rotated.

The valve body 970 includes a flow path, through which the molding material flows, between the first stopper portion 971 and the second stopper portion 972. For example, the valve body 970 includes a first flow path 973 and a second flow path 974 between the first stopper portion 971 and the second stopper portion 972.

The first flow path 973 is used in the plasticizing process, and the screw cylinder connection port 861 and the plunger cylinder connection port 862 communicate with each other through the first flow path 973. For example, as shown in Figs. 7 and 8, the first flow path 973 is formed in a polygonal line shape in cross section.

Meanwhile, the second flow path 974 is used in the filling process, and the plunger cylinder connection port 862 and the nozzle connection port 863 communicate with each other through the second flow path 974. For example, as shown in Figs. 7 and 8, the second flow path 974 is formed in a linear shape in cross section.

The first flowpath 973 and the second flow path 974 intersect each other on the way in Figs. 7 and 8 and are formed in an approximately K shape in cross section. Moreover, The first flow path 973 and the second flow path 974 may not intersect each other on the way.

An inlet 973a of the first flow path 973 and an outlet 974b of the second flow path 974 are provided on one side of the first stopper portion 971. In the present embodiment, the inlet 973a of the first flow path 973 and the outlet 974b of the second flow path 974 are partitioned by a first partition portion 975. However, the inlet 973a and the outlet 974b maybe grouped together without being partitioned.

Meanwhile, an outlet 973b of the first flow path 973 and an inlet 974a of the second flow path 974 are provided on the opposite side of the first stopper portion 971. In the present embodiment, the outlet 973b of the first flow path 973 and the inlet 974a of the second flow path 974 are partitioned by a second partition portion 976. However, the outlet 973b and the inlet 974a may be grouped together without being partitioned.

The inlet 973a and the outlet 973b of the first flow path 973 and the inlet 974a and the outlet 974b of the second flow path 974 are opening portions of the first flow path 973 and opening portions of the second flow path 974 which are open to the peripheral surface 977 of the valve body 970. In addition, the shape of each of the inlet 973a and the outlet 973b of the first flow path 973 and the inlet 974a and the outlet 974b of the second flow path 974 corresponding to the opening portions is an elliptical shape in which a length of each of the inlets 973a and 974a and the outlets 973b and 974b in the axial direction of the valve body 970 is longer than a length of each thereof in the circumferential direction of the peripheral surface 977. More specifically, in the inlet 973a and the outlet 973b of the first flow path 973 and the inlet 974a and the outlet 974b of the second flow path 974, the long axis of each elliptical shape is provided to be parallel to the axial direction of the valve body 970.

In the second embodiment, the first stopper portion 971 and the second stopper portion 972 are provided to be separated from each other along the outer periphery of the valve body 970, and it is possible to decrease a rotation angle of the valve body 970 required for switching between the first state and the second state compared to the related art. Specifically, for example, the rotation angle of the valve body 970 required for switching between the first state and the second state can be halved from 90° in the case of the valve body 870 of the first embodiment to 45°. Accordingly, it is possible to shorten a time taken to switch the flow direction of the molding material and it is possible to shorten the molding cycle time. In addition, when a cylinder is used as a drive source for rotating the valve body 970, it is possible to decrease a length of the cylinder, and it is possible to decrease a volume of a tank for storing a working fluid of the cylinder.

In addition, the rotation angle of the valve body 970 required for switching between the first state and the second state is not limited to 45° and may be 45° or more or less than 45°. Any rotation angle can be adopted as long as the rotation angle of the valve body 970 required for switching between the first state and the second state decreases compared to the valve body 870 of the first embodiment.

Similarly to the first embodiment, in the second embodiment, the shape of each of the opening portions (the inlet 973a and the outlet 973b of the first flow path 973 and the inlet 974a and the outlet 974b of the second flow path 974) of the internal flow path of the valve body 970 is an elliptical shape in which the length of each opening portion in the axial direction of the valve body 970 is longer than the length of each opening portion in the circumferential direction of the peripheral surface 977. According to this configuration, the shape of each opening portion extends in the axial direction from the perfect circular shape of the related art without narrowing a radial gap between the opening portion and the adjacent opening portion, and thus, the shape of each opening portion can be expanded to be formed in an elliptical shape. In the second embodiment, since the radial gap of the opening portion is smaller than that of the first embodiment, the shape of the opening portion is expanded to the axial direction side of the valve body 970 to improve the enlargement of the flow path sectional area, which is particularly effective. Accordingly, similarly to the first embodiment, in the configuration of the second embodiment, it is possible to increase the flow path sectional area without increasing the diameter of the valve body 970.

Hereinbefore, the embodiments are described with reference to specific examples. However, the present disclosure is not limited to these specific examples. The scope of the present invention is defined by the appended claims.

In the above-described embodiments, the shape of each opening portion of the valve bodies 870 and 970 is an elliptical shape in which the long axis of each opening portion is parallel to the axial direction of each of the valve bodies 870 and 970. However, any shape may be adopted as long as the shape of each opening is an elliptical shape in which the length of each of the valve bodies 870 and 970 in the axial direction is longer than the length of each opening portion in the circumferential direction of each of the peripheral surface 872 and 977.

In the above-described embodiments, each of the opening portions of the valve bodies 870 and 970 and each of the opening portions of the valve casing 860 have the same elliptical shape as each other. However, the shapes of the opening portions 865A, 865B, and 865C of the valve casing 860 may be other shapes. When the opening portions 865A, 865B, and 865C of the valve casing 860 face the opening portions on the sides of the valve bodies 870 and 970, it is preferable that each of the opening portions 865A, 865B, and 865C is formed to coincide with both ends in the longitudinal direction of the elliptical shape of the valve body-side opening portion. For example, the shape includes a shape such as an approximately cross shape or a rhomboid shape including a portion in which a size in a short axis direction increases with respect to the elliptical shape of each opening portion on the sides of the valve bodies 870 and 970.

In addition, a sectional area of the flow path of the valve casing 860 may be the same as a sectional area of the flow path of each of the valve bodies 870 and 970. For example, the sectional shape of each of the ports 861, 862, and 863 of the valve casing 860 may be the same elliptical shape as the shape of the flow path of each of the valve bodies 870 and 970.

### Brief Description of the Reference Symbols

1: injection molding machine
300: injection unit
820: screw cylinder (first cylinder, first member)
830: plunger cylinder (second cylinder, second member)
840: nozzle (third member)
850: direction switching valve
860: valve casing
861: screw cylinder connection port (first cylinder connection port, first member connection port)
862: plunger cylinder connection port (second cylinder connection port, second member connection port)
863: nozzle connection port (third member connection port)
870, 970: valve body
871: flow path (first flow path, second flow path)
873A, 873B, 873C: opening portion (valve body-side opening portion)
865A, 865B, 865C opening portion (valve casing-side opening portion)
973: first flow path
974: second flow path
973a, 974a: inlet (valve body-side opening portion)
973b, 974b: outlet (valve body-side opening portion)

## Claims

1. A direction switching valve (850) which switches a flow direction of a fluid between a first member (820), a second member (830), and a third member (840), the valve comprising:
a valve casing (860); and
a columnar valve body (870) which is rotatably disposed inside the valve casing (860),
wherein the valve casing (860) includes a first member connection port (861) which communicates with an inside of the first member, a second member connection port (862) which communicates with an inside of the second member, and a third member connection port (863) which communicates with an inside of the third member,
wherein the valve body (870) includes a first flow path which communicates with the first member connection port and the second member connection port and a second flow path which communicates with the second member connection port and the third member connection port and performs switching such that the fluid flows to one of the first flow path and the second flow path according to a rotation of the valve body (870) inside the valve casing (860), and
wherein the first flow path and the second flow path are configured such that a shape of a valve body-side opening portion (873A, 873B, 873C) of a peripheral surface (872) of the valve body (870) is an elliptical shape in which a length of the valve body-side opening portion (873A, 873B, 873C) in an axial direction of the valve body (870) is longer than a length of the valve body-side opening portion (873A, 873B, 873C) in a circumferential direction of the peripheral surface (872).

2. An injection unit (300), comprising:
a direction switching valve (850) according to claim 1,
a first cylinder (820);
a second cylinder (830); and
a nozzle (840);
wherein the direction switching valve (850) switches a flow direction of a molding material between the first cylinder (820) as a first member, the second cylinder (830) as a second member, and the nozzle (840) as a third member.

3. The injection unit (820) (300) according to claim 2,
wherein the valve body-side opening portion (873A, 873B, 873C) of each of the first flow path and the second flow path is provided such that a long axis of the elliptical shape is parallel to the axial direction.

4. The injection unit (820) (300) according to claim 2 or 3,
wherein each of the first cylinder connection port (861), the second cylinder connection port (862), and the nozzle connection port (863) of the valve casing (860) include a valve casing-side opening portion (865A, 865B, 865C) which is provided on an inner peripheral surface (864) of the valve casing (860), which faces the valve body (870), and
wherein the valve casing-side opening portion (865A, 865B, 865C) is formed such that the valve casing-side opening portion (865A, 865B, 865C) coincides with both ends in a longitudinal direction of the valve body-side opening portion (873A, 873B, 873C) when the valve casing-side opening portion (865A, 865B, 865C) faces the valve body-side opening portion (873A, 873B, 873C) .

5. The injection unit (820) (300) according to any one of claims 2 to 4,
wherein the valve casing-side opening portion (865A, 865B, 865C) is formed in an elliptical shape such that an opening position and a contour of the valve casing-side opening portion (865A, 865B, 865C) coincide with those of the valve body-side opening portion (873A, 873B, 873C) when the valve casing-side opening portion (865A, 865B, 865C) faces the valve body-side opening portion (873A, 873B, 873C).

## Patentansprüche

1. Richtungsschaltventil (850), das eine Strömungsrichtung eines Fluids zwischen einem ersten Element (820), einem zweiten Element (830) und einem dritten Element (840) umschaltet, wobei das Ventil umfasst:
ein Ventilgehäuse (860) und
einen säulenförmigen Ventilkörper (870), der drehbar innerhalb des Ventilgehäuses (860) angeordnet ist,
wobei das Ventilgehäuse (860) einen Erstelement-Verbindungsanschluss (861), der mit einer Innenseite des ersten Elements in Verbindung steht, einen Zweitelement-Verbindungsanschluss (862), der mit einer Innenseite des zweiten Elements in Verbindung steht, und einen Drittelement-Verbindungsanschluss (863), der mit einer Innenseite des dritten Elements in Verbindung steht, einschließt,
wobei der Ventilkörper (870) einen ersten Strömungsweg, der mit dem Erstelement-Verbindungsanschluss und dem Zweitelement-Verbindungsanschluss in Verbindung steht, und einen zweiten Strömungsweg, der mit dem Zweitelement-Verbindungsanschluss und dem Drittelement-Verbindungsanschluss in Verbindung steht, aufweist und ein Umschalten derart durchführt, dass das Fluid gemäß einer Drehung des Ventilkörpers (870) innerhalb des Ventilgehäuses (860) zu einem von dem ersten Strömungsweg und dem zweiten Strömungsweg strömt, und
wobei der erste Strömungsweg und der zweite Strömungsweg derart konfiguriert sind, dass eine Form eines ventilkörperseitigen Öffnungsabschnitts (873A, 873B, 873C) einer Umfangsfläche (872) des Ventilkörpers (870) eine elliptische Form ist, bei der eine Länge des ventilkörperseitigen Öffnungsabschnitts (873A, 873B, 873C) in einer Axialrichtung des Ventilkörpers (870) länger ist als eine Länge des ventilkörperseitigen Öffnungsabschnitts (873A, 873B, 873C) in einer Umfangsrichtung der Umfangsfläche (872).

2. Einspritzeinheit (300), umfassend:
ein Richtungsschaltventil (850) nach Anspruch 1,
einen ersten Zylinder (820),
einen zweiten Zylinder (830) und
eine Düse (840),
wobei das Richtungsschaltventil (850) eine Strömungsrichtung eines Formungsmaterials zwischen dem ersten Zylinder (820) als einem ersten Element, dem zweiten Zylinder (830) als einem zweiten Element und der Düse (840) als einem dritten Element umschaltet.

3. Einspritzeinheit (820) (300) nach Anspruch 2,
wobei der ventilkörperseitige Öffnungsabschnitt (873A, 873B, 873C) sowohl des ersten Strömungswegs als auch des zweiten Strömungswegs derart bereitgestellt wird, dass eine lange Achse der elliptischen Form parallel zu der Axialrichtung ist.

4. Einspritzeinheit (820) (300) nach Anspruch 2 oder 3,
wobei sowohl der Erstzylinder-Verbindungsanschluss (861), der Zweitzylinder-Verbindungsanschluss (862) als auch der Düsen-Verbindungsanschluss (863) des Ventilgehäuses (860) jeweils einen ventilgehäuseseitigen Öffnungsabschnitt (865A, 865B, 865C) aufweist, der an einer Innenumfangsfläche (864) des Ventilgehäuses (860) bereitgestellt wird, die dem Ventilkörper (870) zugewandt ist, und
wobei der ventilgehäuseseitige Öffnungsabschnitt (865A, 865B, 865C) derart geformt ist, dass der ventilgehäuseseitige Öffnungsabschnitt (865A, 865B, 865C) mit beiden Enden in einer Längsrichtung des ventilkörperseitigen Öffnungsabschnitts (873A, 873B, 873C) übereinstimmt, wenn der ventilgehäuseseitige Öffnungsabschnitt (865A, 865B, 865C) dem ventilkörperseitigen Öffnungsabschnitt (873A, 873B, 873C) zugewandt ist.

5. Einspritzeinheit (820) (300) nach einem der Ansprüche 2 bis 4,
wobei der ventilgehäuseseitige Öffnungsabschnitt (865A, 865B, 865C) derart in einer elliptischen Form geformt ist, dass eine Öffnungsposition und eine Kontur des ventilgehäuseseitigen Öffnungsabschnitts (865A, 865B, 865C) mit denjenigen des ventilkörperseitigen Öffnungsabschnitts (873A, 873B, 873C) übereinstimmen, wenn der ventilgehäuseseitige Öffnungsabschnitt (865A, 865B, 865C) dem ventilkörperseitigen Öffnungsabschnitt (873A, 873B, 873C) zugewandt ist.

## Revendications

1. Une soupape de commutation de direction (850) qui commute une direction d'écoulement d'un fluide entre un premier élément (820), un deuxième élément (830) et un troisième élément (840), la soupape comprenant :
un boîtier de soupape (860) ; et
un corps de soupape colonnaire (870) qui est disposé en rotation à l'intérieur du boîtier de soupape (860),
dans laquelle le boîtier de soupape (860) comprend un orifice de raccordement de premier d'élément (861) qui communique avec l'intérieur du premier élément, un orifice de raccordement de deuxième d'élément (862) qui communique avec un intérieur du deuxième élément, et un orifice de raccordement de troisième d'élément (863) qui communique avec un intérieur du troisième élément,
dans laquelle le corps de soupape (870) comprend une première trajectoire d'écoulement qui communique avec l'orifice de raccordement de premier élément et l'orifice de raccordement de deuxième élément et une seconde trajectoire d'écoulement qui communique avec l'orifice de raccordement de deuxième élément et l'orifice de raccordement de troisième élément et réalise la commutation de sorte que le fluide s'écoule vers l'une parmi la première trajectoire d'écoulement et la seconde trajectoire d'écoulement selon une rotation du corps de soupape (870) à l'intérieur du boîtier de soupape (860), et
dans laquelle la première trajectoire d'écoulement et la seconde trajectoire d'écoulement sont configurées de sorte qu'une forme d'une partie d'ouverture du côté du corps de soupape(873A, 873B, 873C) d'une surface périphérique (872) du corps de soupape (870) est une forme elliptique dans laquelle une longueur de la partie d'ouverture du côté du corps de soupape (873A, 873B, 873C) dans une direction axiale du corps de soupape (870) est plus longue qu'une longueur de la partie ouverture du côté du corps de soupape (873A, 873B, 873C) dans une direction circonférentielle de la surface périphérique (872).

2. Une unité d'injection (300) comprenant :
une soupape de commutation de direction (850) selon la revendication 1,
un premier cylindre (820) ;
un second cylindre (830) ; et
une buse (840) ;
dans laquelle la soupape de commutation de direction (850) commute une direction d'écoulement d'un matériau de moulage entre le premier cylindre (820) en tant que premier élément, le second cylindre (830) en tant que deuxième élément et la buse (840) en tant que troisième élément.

3. L'unité d'injection (820) (300) selon la revendication 2,
dans laquelle la partie d'ouverture du côté du corps de soupape (873A, 873B, 873C) de chacune parmi la première trajectoire d'écoulement et la seconde trajectoire d'écoulement est prévue de sorte qu'un axe long de la forme elliptique est parallèle à la direction axiale.

4. L'unité d'injection (820) (300) selon la revendication 2 ou 3,
dans laquelle chacun parmi l'orifice de raccordement de premier cylindre (861), l'orifice de raccordement de second cylindre (862) et l'orifice de raccordement de buse (863) du boîtier de soupape (860) comprennent une partie d'ouverture du côté du boîtier de soupape (865A, 865B, 865C) qui est prévue sur une surface périphérique interne (864) du boîtier de soupape (860), qui fait face au corps de soupape (870), et
dans laquelle la partie d'ouverture du côté du boîtier de soupape (865A, 865B, 865C) est formée de sorte que la partie d'ouverture du côté du boîtier de soupape (865A, 865B, 865C) coïncide avec les deux extrémités dans une direction longitudinale de la partie d'ouverture du côté du corps de soupape (873A, 873B, 873C) lorsque la partie d'ouverture du côté du boîtier de soupape (865A, 865B, 865C) fait face à la partie d'ouverture du côté du corps de soupape (873A, 873B, 873C).

5. L'unité d'injection (820) (300) selon l'une quelconque des revendications 2 à 4,
dans laquelle la partie d'ouverture du côté du boîtier de soupape (865A, 865B, 865C) est formée selon une forme elliptique de sorte qu'une position d'ouverture et un contour de la partie d'ouverture du côté du boîtier de soupape (865A, 865B, 865C) coïncide avec ceux de la partie d'ouverture du côté du corps de soupape (873A, 873B, 873C) lorsque la partie d'ouverture du côté du boîtier de soupape (865A, 865B, 865C) fait face à la partie d'ouverture du côté du corps de soupape (873A, 873B, 873C).
